(19) **Europäisches Patentamt / European Patent Office / Office européen des brevets**

(11) **EP 2 447 306 B1**

(12) **EUROPEAN PATENT SPECIFICATION**

(45) Date of publication and mention of the grant of the patent:
**24.08.2016 Bulletin 2016/34**

(51) Int Cl.:
*C08J 5/24* (2006.01)  *C08J 5/04* (2006.01)
*C09J 135/00* (2006.01)  *D04H 1/587* (2012.01)
*C08L 13/02* (2006.01)  *D04H 1/64* (2012.01)

(21) Application number: **11183209.3**

(22) Date of filing: **29.09.2011**

(54) **Aqueous nonwoven binder and treated nonwoven prepared therefrom**

Wässrige Vliesstoffbinder und daraus hergestellter, behandelter Vliesstoff

Liant aqueux pour non tissés et non tissé traité préparé à partir de celui-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2010 US 407594 P**

(43) Date of publication of application:
**02.05.2012 Bulletin 2012/18**

(73) Proprietor: **Rohm and Haas Company Philadelphia, PA 19106-2399 (US)**

(72) Inventor: **Rice, Katherine Sue Glenside, PA Pennsylvania 19038 (US)**

(74) Representative: **Houghton, Mark Phillip et al Patent Outsourcing Limited 1 King Street Bakewell, Derbyshire DE45 1DZ (GB)**

(56) References cited:
**CN-A- 101 437 887      US-A- 5 932 665**
**US-A1- 2003 105 190      US-A1- 2007 191 803**
**US-B1- 6 262 159      US-B1- 6 337 359**

**Description**

This invention relates to an aqueous nonwoven binder, a method for forming a treated nonwoven substrate using the aqueous nonwoven binder, and the treated nonwoven substrate so treated. The aqueous nonwoven binder includes an emulsion polymer including, as copolymerized units: from 0.1% to 5% monoethylenically-unsaturated dicarboxylic acid monomer by weight, based on the weight of the emulsion polymer; and from 12% to 22% monoethylenically-unsaturated monoacid monomer by weight, based on the weight of the emulsion polymer; and from 0% to 2% multi-ethylenically unsaturated monomer by weight, based on the weight of said emulsion polymer; and at least one other copolymerized ethylenically unsaturated monomer; wherein the calculated Tg, calculated using the Fox equation, of said emulsion polymer is from -20°C to 30°C.

U.S. Patent No. 5,451,432 discloses a method for treating a flexible, porous substrate with a water-borne formaldehyde-free composition, the composition containing certain copolymerized ethylenically-unsaturated dicarboxylic acids, or derivatives thereof, wherein the binder is partially neutralized with a fixed base. An improved balance of dispersibility of a treated nonwoven substrate while maintaining desirable level of wet strength is still desired. It has been found that selected aqueous nonwoven emulsion polymer binders provide the desired properties.

In a first aspect of the present invention, there is provided an aqueous nonwoven binder comprising an emulsion polymer comprising, as copolymerized units: from 0.1% to 5% monoethylenically-unsaturated dicarboxylic acid monomer by weight, based on the weight of said emulsion polymer; and from 12% to 22% monoethylenically-unsaturated monoacid monomer by weight, based on the weight of said emulsion polymer; and from 0% to 2% multi-ethylenically unsaturated monomer by weight, based on the weight of said emulsion polymer; and at least one other copolymerized ethylenically unsaturated monomer; wherein the calculated Tg, calculated using the Fox equation, of said emulsion polymer is from -20°C to 30°C.

In a second aspect of the present invention, there is provided a method for forming a treated nonwoven substrate comprising: a) forming an aqueous composition comprising an emulsion polymer comprising, as copolymerized units: from 0.1% to 5% monoethylenically-unsaturated dicarboxylic acid monomer by weight, based on the weight of said emulsion polymer; and from 12% to 22% monoethylenically-unsaturated monoacid monomer by weight, based on the weight of said emulsion polymer; and from 0% to 2% multi-ethylenically unsaturated monomer by weight, based on the weight of said emulsion polymer; and at least one other copolymerized ethylenically unsaturated monomer; wherein the calculated Tg, calculated using the Fox equation, of said emulsion polymer is from -20°C to 30°C; b) contacting said nonwoven substrate with said aqueous composition; and c) heating said contacted nonwoven to a temperature of from 120°C to 220°C.

In a third aspect of the present invention, there is provided a treated nonwoven substrate formed by the method of the second aspect of the present invention.

The aqueous nonwoven binder includes an emulsion polymer; that is, a polymer prepared by the addition polymerization of ethylenically-unsaturated monomers in an aqueous emulsion polymerization process. By "aqueous" herein is meant a composition in which the continuous phase is water or, in the alternative, a mixture including predominantly water but also including water-miscible solvent. By "nonwoven" herein is meant a fabric-like assembly of fibers typically in sheet or web form that is not a woven or knitted material. By "binder" herein is meant a composition including a polymer.

The aqueous binder herein includes an emulsion polymer that is curable, that is it undergoes a chemical process to some extent, such as covalent bond formation, under the agency of added energy, most typically heating. The emulsion polymer includes, as copolymerized units, from 0.1% to 5%, preferably from 0.1 to 2% by weight, and more preferably from 0.2% to 0.8%, by weight based on the weight of the emulsion polymer, monoethylenically-unsaturated dicarboxylic acid monomer such as, for example, itaconic acid, fumaric acid, maleic acid, including their anhydrides, salts, and mixtures thereof. Preferred is itaconic acid.

The emulsion polymer also includes, as copolymerized units, from 12% to 22%, preferably from 15% to 22%, by weight based on the weight of the emulsion polymer, monoethylenically-unsaturated monoacid monomer. Monoacid monomers include, for example, carboxylic acid monomers such as, for example, acrylic acid, methacrylic acid, crotonic acid, monomethyl itaconate, monomethyl fumarate, monobutyl fumarate; and sulfur- and phosphorous-containing acid monomers. Preferred monoacid monomers are carboxylic acid monomers. More preferred is acrylic acid.

The emulsion polymer includes, in addition to copolymerized monoacid and dicarboxylic acid monomers, at least one other copolymerized ethylenically unsaturated monomer such as, for example, a (meth)acrylic ester monomer including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, ureidofunctional (meth)acrylates and acetoacetates, acetamides or cyanoacetates of (meth)acrylic acid; styrene or substituted styrenes; vinyl toluene; butadiene; vinyl acetate or other vinyl esters; vinyl monomers such as vinyl chloride, vinylidene chloride, N-vinyl pyrollidone; and (meth)acrylonitrile The use of the term "(meth)" followed by another term such as (meth)acrylate or (meth)acrylamide, as used throughout the disclosure, refers to both acrylates and methacrylates or acrylamides and methacrylamides, respectively. Preferably, monomers that may generate formaldehyde on polymerization or during subsequent processing such as, for example, N-alkylol (meth)acrylamide are excluded. The emulsion polymer includes from 0 to 2 wt%, or in the alternative, from 0 to 0. 1wt%, based on the weight of the polymer, of a copolymerized multi-ethylenically unsaturated monomer, although the level must be selected so as not to materially compromise the dispersibility of the nonwoven substrate treated with the aqueous nonwoven binder that includes the emulsion polymer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

Mixtures of emulsion polymers having different compositions are also contemplated. For a mixture of two or more emulsion polymers, the copolymerized monoacid and dicarboxylic acid content shall be determined from the overall composition of the emulsion polymers without regard for the number or composition of the emulsion polymers therein

The emulsion polymerization techniques used to prepare the emulsion polymer are well known in the art such as, for example, as disclosed in U.S. Patents No. 4,325,856; 4,654,397; and 4,814,373. Conventional surfactants may be used such as, for example, anionic and/or nonionic emulsifiers such as, for example, alkali metal or ammonium alkyl sulfates, alkyl sulfonic acids, fatty acids, copolymerizable surfactants, and oxyethylated alkyl phenols. Preferred are anionic emulsifiers. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymers. The monomer mixture may be added neat or as an emulsion in water. The monomer mixture may be added in a single addition or in multiple additions or continuously over the reaction period using a uniform or varying composition. Additional ingredients such as, for example, free radical initiators, oxidants, reducing agents, chain transfer agents, neutralizers, surfactants, and dispersants may be added prior to, during, or subsequent to any of the stages. Processes yielding polymodal particle size distributions such as those disclosed in US Patent Nos. 4,384,056 and 4,539,361, for example, may be employed.

In another embodiment of the present invention, the emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain monomers, surfactants, chain transfer agents, etc. selected from those disclosed hereinabove for the emulsion polymer. For a multi-staged emulsion polymer, the copolymerized monoacid and dicarboxylic acid content shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373.

The calculated glass transition temperature ("Tg") of the emulsion polymer is from -20°C to 30°C. Tgs of the polymers herein are those calculated using the Fox equation (T.G. Fox, Bull. Am. Physics Soc., Volume 1, Issue No. 3, p. 123(1956)). That is, for calculating the Tg of a copolymer of monomers M1 and M2,

$$1/Tg(calc.) = w(M1)/Tg(M1) + w(M2)/Tg(M2)$$

,

wherein Tg(calc.) is the glass transition temperature calculated for the copolymer w(M1) is the weight fraction of monomer M1 in the copolymer w(M2) is the weight fraction of monomer M2 in the copolymer Tg(M1) is the glass transition temperature of the homopolymer of M1 Tg(M2) is the glass transition temperature of the homopolymer of M2, all temperatures being in °K.

The glass transition temperature of homopolymers may be found, for example, in "Polymer Handbook", edited by J. Brandrup and E.H. Immergut, Interscience Publishers. In any event the following homopolymer Tgs are to be used in the Fox equation calculation for the following polyacids: poly(methacrylic acid) Tg=185°C; poly(acrylic acid) Tg=106°C; poly(itaconic acid) Tg=154°C; and poly(maleic anhydride) Tg=154°C.

The average particle diameter of the emulsion polymer particles is typically from 30 nanometers to 500 nanometers, preferably from 200 nanometers to 450 nanometers as measured by a Brookhaven Model BI-90 Particle Sizer supplied by Brookhaven Instrument Corp., Holtsville, NY.

The aqueous nonwoven binder of the present invention is preferably a formaldehyde-free composition. By "formaldehyde-free composition" herein is meant that the composition is substantially free from formaldehyde, nor does it liberate substantial formaldehyde as a result of drying and/or curing. In order to minimize the formaldehyde content of the composition it is preferred, when preparing the emulsion polymer of the present invention, to use polymerization adjuncts such as, for example, initiators, reducing agents, chain transfer agents, biocides, surfactants, and the like, which are themselves free from formaldehyde, do not generate formaldehyde during the polymerization process, and do not generate or emit formaldehyde during the treatment of a substrate. When low levels of formaldehyde are acceptable in the aqueous composition or when compelling reasons exist for using adjuncts which generate or emit formaldehyde, such compositions may be used.

The aqueous nonwoven binder may contain, in addition to the emulsion polymer, conventional treatment components such as, for example, emulsifiers, pigments, fillers or extenders, anti-migration aids, curing agents, coalescents, surfactants, biocides, plasticizers, organosilanes, anti-foaming agents, corrosion inhibitors, colorants, waxes, other polymers not of the present invention, and anti-oxidants.

In one aspect of the present invention a method for forming a treated substrate is provided including a) forming the aqueous nonwoven binder of the present invention; b) contacting a nonwoven substrate with the aqueous nonwoven binder; and c) heating the contacted nonwoven to a temperature of from 120°C to 220°C. The nonwoven substrate includes paper; nonwoven fabrics; felts and mats; or other assemblies of fibers. Substrates including fibers may include cellulosic fibers such as wood pulp, cotton, and rayon; synthetic fibers such as, for example, polyester, glass; mixtures thereof, and the like. Optional synthetic fibers are typically selected so as their length and level is not inimical to the ultimate dispersibility of the treated nowoven substrate. Preferred are cellulosic fibers. The nonwoven substrate may be formed by methods known in the art such as wet-laid or air-laid web formation.

The nonwoven substrate is contacted with the aqueous nonwoven binder using conventional application techniques such as, for example, air or airless spraying, padding, saturating, roll coating, curtain coating, gravure printing, and the like. The nonwoven substrate may be contacted with the aqueous nonwoven binder so as to provide binder at or near one or both surfaces or distributed uniformly, or not, throughout the structure. It is also contemplated that the aqueous nonwoven binder may be applied in a nonuniform manner to one or both surfaces when a patterned distribution is desired. Heating the contacted nonwoven to a temperature of from 120°C to 220°C, preferably from 140°C to 180°C, for a time sufficient to achieve an acceptable level of dryness and cure is effected. The drying and curing functions may be effected in two or more distinct steps, if desired. For example, the composition may be first heated at a temperature and for a time sufficient to substantially dry but not to substantially cure the composition and then heated for a second time at a higher temperature and/or for a longer period of time to effect curing. Such a procedure, referred to as "B-staging", can be used to provide binder-treated nonwoven, for example, in roll form, which can at a later time be cured, with or without forming or molding into a particular configuration, concurrent with the curing process.

The treated nonwoven substrate of the present invention has an useful balance of strength, such as wet strength required if the treated nonwoven were to be stored in the wet state such as, for example, for use in wipes, concurrently with a useful degree of dispersibility, such as, for example, if the treated nonwoven were deposited in an excess of water, such as in a toilet flushing action.

Abbreviations used

   AA = acrylic acid
   EA= ethyl acrylate
   IA = itaconic acid
   DI water = deionized water

EXAMPLE 1. Formation of emulsion polymer

To a 5000ml round bottom flask fitted with a stirrer, condenser, temperature monitor, heating mantle and nitrogen inlet was added 950g DI water which was subsequently heated to 85°C. A monomer premix was prepared from 800g DI water, 26.7g DISPONIL™ FES 993 (Cognis), 3.2g IA, 1280g EA and 317g AA. With the reactor water at 85°C 3.2g of ammonium persulfate dissolved in 35g DI water was added. The premix feed was begun at 11.8g/min. After 15 min the feed rate was increased to 23.7g/min. At the same time a feed of 1.1g ammonium persulfate dissolved in 80g DI water was begun at 0.77 g/min. After the feeds were completed the batch was slowly cooled over 40min to about 75°C. At the targeted temperature 7g of 0.15% ferrous sulfate heptahydrate aqueous solution was added. Both 2.7g of tBHP (70% aqueous sol) in 50g DI water and 1.9g of BRUGGOLITE™ FF6 (Bruggaman Chemicals) in 50g DI water were fed over one hour. The batch was cooled to room temperature and filtered. The emulsion polymer pH was 2.6, solids content 43.9%, LV viscosity with a #2 spindle at 60 rpm was 35 Cps and particle size via BI90 was 350nm.

EXAMPLES 2-5 and COMPARATIVE EXAMPLES 1-7. Preparation of emulsion polymers

The emulsion polymers were made according to Example 1 with the following monomer charges. Comparative samples 1-3 required 1145g of water in the kettle due to viscosity build. The monomer amounts used and pH and solids content of the resulting emulsion polymer are presented in Table 2.1. Polymer compositions (in weight % based on emulsion polymer weight, Brookfield viscosity, and particle size are presented in Table 2.2

Table 2.1. Formation and characterization of emulsion polymers

| Sample | EA (g) | AA (g) | IA (g) | pH | Solids (%) |
|---|---|---|---|---|---|
| Ex. 1 | 1280 | 317 | 3.2 | 2.6 | 43.9 |
| Comp.Ex. 1 | 1120 | 460 | 0 | 2.4 | 41.7 |
| Comp.Ex. 2 | 1120 | 472 | 8 | 2.6 | 41.7 |
| Comp.Ex. 3 | 1120 | 400 | 80 | 2.5 | 41.4 |
| Comp.Ex. 4 | 1440 | 160 | 0 | 2.6 | 44.2 |
| Comp.Ex 5 | 1440 | 152 | 8 | 2.6 | 43.9 |
| Comp.Ex. 6 | 1440 | 80 | 80 | 2.5 | 43.5 |
| Comp.Ex. 7 | 1280 | 320 | 0 | 2.5 | 43.9 |
| Ex. 2 | 1280 | 312 | 8 | 2.6 | 43.9 |
| Ex. 3 | 1280 | 304 | 16 | 2.7 | 43.6 |
| Ex. 4 | 1280 | 288 | 32 | 2.6 | 43.8 |
| Ex. 5 | 1280 | 240 | 80 | 2.4 | 43.3 |

Table 2.2 Emulsion polymer composition and characterization

| Sample | EA | AA | IA | LV 2/60(cps.) | Particle size(nm) |
|---|---|---|---|---|---|
| Ex. 1 | 80 | 19.8 | 0.2 | 35 | 350 |
| Comp. Ex. 1 | 70 | 30 | 0 | 190 | 400 |
| Comp. Ex. 2 | 70 | 29.5 | 0.5 | 132 | 340 |
| Comp. Ex. 3 | 70 | 25 | 5 | 81 | 280 |
| Comp. Ex. 4 | 90 | 10 | 0 | 66 | 300 |
| Comp. Ex. 5 | 90 | 9.5 | 0.5 | 65 | 310 |
| Comp. Ex. 6 | 90 | 5 | 5 | 69 | 320 |
| Comp. Ex. 7 | 80 | 20 | 0 | 78 | 340 |
| Ex. 2 | 80 | 19.5 | 0.5 | 40 | 330 |
| Ex. 3 | 80 | 19 | 1 | 32 | 315 |
| Ex. 4 | 80 | 18 | 2 | 32 | 320 |
| Ex. 5 | 80 | 15 | 5 | 69 | 315 |

EXAMPLE 6. Formation of aqueous nonwoven binders

To a one gallon vessel fitted with an overhead stirrer was added 1370.0g Example 1 emulsion polymer and 1633.6g DI water to give 20% bath solids. The mixture was then stirred for 15 minutes to ensure good mixing. The remaining samples were prepared in the same way with the following binder and DI water charges.

Table 6.1 Formation of aqueous nonwoven binder

| Emulsion Polymer | g Emulsion Polymer | g H2O | Aqueous Nonwoven Binder |
|---|---|---|---|
| Comp.Ex.1 | 1439.0 | 1561.3 | Comp.Ex.1a |
| Comp.Ex.2 | 1439.0 | 1561.3 | Comp.Ex.2a |
| Comp.Ex.3 | 1450.0 | 1551.5 | Comp.Ex.3a |
| Comp.Ex.7 | 1367.0 | 1633.6 | Comp.Ex.7a |
| Ex. 1 | 1367.0 | 1633.6 | Ex.1a |
| Ex. 2 | 1367.0 | 1633.6 | Ex. 2a |
| Ex. 3 | 1370.0 | 1630.3 | Ex. 3a |
| Ex. 4 | 1370.0 | 1630.3 | Ex. 4a |
| Ex. 5 | 1386.0 | 1614.7 | Ex. 5a |
| Comp.Ex.4 | 1358.0 | 1643.2 | Comp.Ex.4a |
| Comp.Ex.5 | 1367.0 | 1633.6 | Comp.Ex.5a |
| Comp.Ex.6 | 1380.0 | 1621.5 | Comp.Ex.6a |

EXAMPLE 7. Formation of treated nonwoven substrate

The nonwoven used was a lightly embossed airlaid wood pulp web with a basis weight of 50 g/m$^2$.
Spray Booth Settings: The spray tip used was a 0.015/650033 type. This spray tip gave a fan type spray pattern. The front panel (adjustable) settings on the spray booth were as follows: Traverse 17-19 psi, pump 22-24 psi, spray 44-50 psi. The spray overhead reading was 225 psi. The web was attached to a piece of cardboard. The cardboard rested on a piece of wire mesh attached to a cable which propelled the mesh, cardboard and web through the spray booth. The web was twelve inches from the spray tip when it passed directly under the spray tip.

Spray Example

A cutting board was used to cut the nonwoven web into nine inch by eleven inch pieces. Each piece was then numbered, pre-dried and immediately weighed to give a basis weight. This pre-weighed piece was then clipped to a piece of cardboard. The aqueous nonwoven binder was used in a spray booth to spray the pre-weighed web twice. This piece of twice-sprayed web was then dried in a Mathis oven for 1.5 minutes at 150°C. This same piece of sprayed and dried web was then flipped over, and again clipped to a piece of cardboard. The spray booth was used to spray the other side of the web twice. This web was again dried in a Mathis oven for 1.5 minutes at 150°C, then immediately weighed to determine total % Add-on. Add-on levels were targeted to 20%. % Add-on = 100 x (Wt.B - Wt.A)/ Wt.B.

EXAMPLE 8. Evaluation of treated nonwoven substrate

Lotion A 0.1% solution of TRITON™ X-100 surfactant was used to simulate the lotion used on wet wipes. The amount of lotion added to each piece of treated nonwoven substrate was 3.5 to 4.0 times the weight of the web. The lotion was evenly distributed on the substrate. Performance in terms of Cross-direction wet tensile "(CDWT)" strength and Tip Tube Dispersability were evaluated after one day in lotion.

Cross-Direction Wet Tensile (CDWT) Strength

The cross-direction wet tensile strength of a one inch (width) by four inch (length) piece of the above web (one day after lotion application) was measured using a Thwing-Albert EJA tensile tester with MAP 3 software. The test speed was 12 inches/minute. Peak load was measured, with each value reported being an average of eight to ten replicates.

Tipping Tube

The INDA/EDANA Tipping Tube test (FG 511.2 Tier 1 - Dispersability Tipping Tube Test) is a method for assessing the dispersability of a wet wipe after it is used and flushed. It made use of a four inch square piece of treated nonwoven, a clear tube and 700 ml of tap water. The tube was then repeatedly tipped to simulate flushing and transport through building pipes and the number of tipping cycles were recorded. Details of the tipping tube test can be found in the INDA/EDANA Flushability Guidelines. The test allowed for preconditioning of the wet wipe by placing it in tap water for 30 seconds to six hours prior to the start of the tipping tube test. A one hour dwell time in tap water was used to precondition our samples. At the end of the INDA/EDANA test, the contents of the tube were passed through screens and the various size fractions weighed to determine the extent of disintegration. The number of tipping cycles to first break (two to three pieces), number of tipping cycles to second break (four to five pieces), number of tipping cycles until dispersed (defined as many pieces, none large) and number of tipping cycles at which the test was ended were recorded. The test was ended at 240 tipping cycles even if the sample had not yet been dispersed. Comments as to the appearance of what remained at the end of the test were also recorded.

Table 8.1 Evaluation of treated nonwoven substrates. After spraying each side, web was dried in Mathis Oven for 1.5 minutes at 150°C (3 min total).

| Aqueous composition | CDWT | | | Tip Tube, 1 day in 3.5-4.0x 0.1 X-100 + 1 hr H2O Soak | | | | |
|---|---|---|---|---|---|---|---|---|
| | | | | | | | | |
| | Avg. Peak (g) | Std. Dev. | | 2-3 pieces | 4-5 pieces | Dispersed | End | Comments |
| Comp.Ex. 1a | 71 | 6 | | 2 | 3 | 6 | 8 | finely dispersed |
| Comp.Ex. 2a | 86 | 20 | | 3 | 5 | 7 | 11 | finely dispersed |
| Comp.Ex. 3a | 84 | 16 | | 23 | 29 | 56 | 80 | small pieces |
| Comp.Ex. 7a | 88 | 32 | | 31 | 38 | 63 | 82 | small pieces |
| Ex.1a | 186 | 23 | | 68 | 79 | 117 | 140 | small & medium (0.75 in.) pieces |
| Ex.2a | 185 | 26 | | 15 | 18 | 26 | 44 | small pieces |
| Ex.3a | 93 | 24 | | 33 | 40 | 65 | 85 | small pieces |
| Ex.4a | 123 | 13 | | 29 | 41 | 79 | 106 | small pieces |
| Ex.5a | 172 | 22 | | 83 | 105 | 170 | 203 | small & medium (0.75 in.) pieces |
| Comp.Ex. 4a | 148 | 18 | | 33 | 37 | 65 | 103 | |
| Comp.Ex. 5a | 354 | 44 | | >240 | | | >240 | intact/sl.damaged |
| Comp.Ex. 6a | 446 | 44 | | >240 | | | >240 | intact |

Table 8.2 Evaluation of treated nonwoven substrates. After spraying each side, web was dried in Mathis Oven for 1.5 minutes at 150°C (3 min total); then post -heated for 1 minute at 175°C.

| Aqueous compositi on | CDWT | | Tip Tube, 1 day in 3.5-4.0x 0.1 X-100 + 1 hr H2O Soak | | | | |
|---|---|---|---|---|---|---|---|
| | Lava. Peak (g) | Std. Dev. | 2-3 pieces | 4-5 pieces | Dispersed | End | Comments |
| Comp.Ex. 1a | 189 | 16 | 21 | 25 | 50 | 125 | small pieces & fines |
| Comp.Ex. 2a | 173 | 12 | 19 | 22 | 67 | 125 | small pieces & fines |

(continued)

| Aqueous composition | CDWT | | Tip Tube, 1 day in 3.5-4.0x 0.1 X-100 + 1 hr H2O Soak | | | | |
|---|---|---|---|---|---|---|---|
| | Lava. Peak (g) | Std. Dev. | 2-3 pieces | 4-5 pieces | Dispersed | End | Comments |
| Comp.Ex. 3a | 181 | 15 | 37 | 60 | 145 | 240 | small pieces |
| Comp.Ex. 7a | 397 | 44 | >240 | | | >240 | damaged |
| Ex.1a | 448 | 43 | >240 | | | >240 | damaged |
| Ex.2a | 442 | 25 | 75 | 95 | | 240 | 2 large pieces & fines |
| Ex.3a | 418 | 29 | 165 | 190 | | 240 | 2 large & 4 medium pieces |
| Ex.4a | 375 | 39 | 154 | 186 | | 240 | 2 large pieces & fines |
| Ex.5a | 411 | 42 | 170 | 213 | | 240 | 1 large piece & fines |
| Comp.Ex. 4a | 311 | 30 | >240 | | | >240 | intact |
| Comp.Ex. 5a | 716 | 60 | >240 | | | >240 | intact |
| Comp.Ex. 6a | 810 | 72 | >240 | | | >240 | intact |

Aqueous nonwoven binders of Examples 1a-5a of the present invention including emulsion polymers of Examples 1-5 of the present invention provide a desired balance of wet tensile strength and dispersibility relative to the aqueous nonwoven binders of Comparative Examples 1a-7a including emulsion polymers of Comparative Examples 1-7.

**Claims**

1.   An aqueous nonwoven binder comprising an emulsion polymer comprising, as copolymerized units:

from 0.1% to 5% monoethylenically-unsaturated dicarboxylic acid monomer by weight, based on the weight of said emulsion polymer; and
from 12% to 22% monoethylenically-unsaturated monoacid monomer by weight, based on the weight of said emulsion polymer; and
from 0% to 2% multi-ethylenically unsaturated monomer by weight, based on the weight of said emulsion polymer; and
at least one other copolymerized ethylenically unsaturated monomer;
wherein the calculated Tg, calculated using the Fox equation, of said emulsion polymer is from -20°C to 30°C.

2.   The aqueous nonwoven binder of Claim 1 wherein said emulsion polymer comprises, as copolymerized units, from 0.1% to 2% monoethylenically-unsaturated dicarboxylic acid monomer by weight, based on the weight of said emulsion polymer.

3.   A method for forming a treated nonwoven substrate comprising:

a) forming an aqueous nonwoven binder comprising an emulsion polymer comprising, as copolymerized units:

from 0.1% to 5% monoethylenically-unsaturated dicarboxylic acid monomer by weight, based on the weight of said emulsion polymer; and
from 12% to 22% monoethylenically-unsaturated monoacid acid monomer by weight, based on the weight of said emulsion polymer; and
from 0% to 2% multi-ethylenically unsaturated monomer by weight, based on the weight of said emulsion polymer; and
at least one other copolymerized ethylenically unsaturated monomer;
wherein the calculated Tg, calculated using the Fox equation, of said emulsion polymer is from -20°C to 30°C;

b) contacting a nonwoven substrate with said aqueous composition; and
c) heating said contacted nonwoven to a temperature of from 120°C to 220°C.

4. The method for forming a treated nonwoven substrate of Claim 3 wherein said emulsion polymer comprises, as copolymerized units, from 0.1% to 2% monoethylenically-unsaturated dicarboxylic acid monomer by weight, based on the weight of said emulsion polymer.

5. A treated nonwoven substrate formed by the method of Claim 3.

6. A treated nonwoven substrate formed by the method of Claim 4.

**Patentansprüche**

1. Ein wässriges Vliesstoffbindemittel, beinhaltend ein Emulsionspolymer, das als copolymerisierte Einheiten Folgendes beinhaltet:

von 0,1 Gew.-% bis 5 Gew.-% monoethylenisch ungesättigtes Dicarbonsäuremonomer, bezogen auf das Gewicht des Emulsionspolymers; und
von 12 Gew.-% bis 22 Gew.-% monoethylenisch ungesättigtes einsäuriges Monomer, bezogen auf das Gewicht des Emulsionspolymers; und
von 0 Gew.-% bis 2 Gew.-% multiethylenisch ungesättigtes Monomer, bezogen auf das Gewicht des Emulsionspolymers; und
mindestens ein anderes copolymerisiertes ethylenisch ungesättigtes Monomer;
wobei die berechnete Tg des Emulsionspolymers, berechnet unter Verwendung der Fox-Gleichung, von -20 °C bis 30 °C beträgt.

2. Wässriges Vliesstoffbindemittel gemäß Anspruch 1, wobei das Emulsionspolymer als copolymerisierte Einheiten von 0,1 Gew.-% bis 2 Gew.-% monoethylenisch ungesättigtes Dicarbonsäuremonomer, bezogen auf das Gewicht des Emulsionspolymers, beinhaltet.

3. Ein Verfahren zum Bilden eines behandelten Vliesstoffsubstrats, das Folgendes beinhaltet:

a) Bilden eines wässrigen Vliesstoffbindemittels, beinhaltend ein Emulsionspolymer, das als copolymerisierte Einheiten Folgendes beinhaltet:

von 0,1 Gew.-% bis 5 Gew.-% monoethylenisch ungesättigtes Dicarbonsäuremonomer, bezogen auf das Gewicht des Emulsionspolymers; und
von 12 Gew.-% bis 22 Gew.-% monoethylenisch ungesättigtes einsäuriges Säuremonomer, bezogen auf das Gewicht des Emulsionspolymers; und
von 0 Gew.-% bis 2 Gew.-% multiethylenisch ungesättigtes Monomer, bezogen auf das Gewicht des Emulsionspolymers; und
mindestens ein anderes copolymerisiertes ethylenisch ungesättigtes Monomer;
wobei die berechnete Tg des Emulsionspolymers, berechnet unter Verwendung der Fox-Gleichung, von -20 °C bis 30 °C beträgt;

b) In-Kontakt-Bringen eines Vliesstoffsubstrats mit der wässrigen Zusammensetzung; und
c) Erhitzen des in Kontakt gebrachten Vliesstoffs auf eine Temperatur von 120 °C bis 220 °C.

4. Verfahren zum Bilden eines behandelten Vliesstoffsubstrats gemäß Anspruch 3, wobei das Emulsionspolymer als copolymerisierte Einheiten von 0,1 Gew.-% bis 2 Gew.-% monoethylenisch ungesättigtes Dicarbonsäuremonomer, bezogen auf das Gewicht des Emulsionspolymers, beinhaltet.

5. Ein behandeltes Vliesstoffsubstrat, gebildet nach dem Verfahren gemäß Anspruch 3.

**6.** Ein behandeltes Vliesstoffsubstrat, gebildet nach dem Verfahren gemäß Anspruch 4.

**Revendications**

**1.** Un liant aqueux pour non-tissés comprenant un polymère en émulsion comprenant, comme unités copolymérisées :

de 0,1 % à 5 % de monomère d'acide dicarboxylique monoéthyléniquement insaturé en poids, rapporté au poids dudit polymère en émulsion ; et
de 12 % à 22 % de monomère de monoacide monoéthyléniquement insaturé en poids, rapporté au poids dudit polymère en émulsion ; et
de 0 % à 2 % de monomère multi-éthyléniquement insaturé en poids, rapporté au poids dudit polymère en émulsion ; et
au moins un autre monomère éthyléniquement insaturé copolymérisé ;
où la Tg calculée, calculée à l'aide de l'équation de Fox, dudit polymère en émulsion va de -20 °C à 30 °C.

**2.** Le liant aqueux pour non-tissés de la revendication 1 où ledit polymère en émulsion comprend, comme unités copolymérisées, de 0,1 % à 2 % de monomère d'acide dicarboxylique monoéthyléniquement insaturé en poids, rapporté au poids dudit polymère en émulsion.

**3.** Une méthode pour former un substrat en non-tissé traité comprenant :

a) le fait de former un liant aqueux pour non-tissés comprenant un polymère en émulsion comprenant, comme unités copolymérisées :

de 0,1 % à 5 % de monomère d'acide dicarboxylique monoéthyléniquement insaturé en poids, rapporté au poids dudit polymère en émulsion ; et
de 12 % à 22 % de monomère d'acide monoacide monoéthyléniquement insaturé en poids, rapporté au poids dudit polymère en émulsion ; et
de 0 % à 2 % de monomère multi-éthyléniquement insaturé en poids, rapporté au poids dudit polymère en émulsion ; et
au moins un autre monomère éthyléniquement insaturé copolymérisé ;
où la Tg calculée, calculée à l'aide de l'équation de Fox, dudit polymère en émulsion va de -20 °C à 30 °C ;

b) le fait de mettre en contact un substrat en non-tissé avec ladite composition aqueuse ; et
c) le fait de chauffer ledit non-tissé mis en contact jusqu'à une température allant de 120 °C à 220 °C.

**4.** La méthode pour former un substrat en non-tissé traité de la revendication 3 où ledit polymère en émulsion comprend, comme unités copolymérisées, de 0,1 % à 2 % de monomère d'acide dicarboxylique monoéthyléniquement insaturé en poids, rapporté au poids dudit polymère en émulsion.

**5.** Un substrat en non-tissé traité formé grâce à la méthode de la revendication 3.

**6.** Un substrat en non-tissé traité formé grâce à la méthode de la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5451432 A
- US 4325856 A
- US 4654397 A
- US 4814373 A
- US 4384056 A
- US 4539361 A

### Non-patent literature cited in the description

- **T.G. FOX.** *Bull. Am. Physics Soc.,* 1956, vol. 1 (3), 123